# EUROPEAN PATENT APPLICATION

(11) **EP 4 800 785 A1**
(43) Date of publication of application: **02.09.2026**
(21) Application number: 25216530.3
(22) Date of filing: 18.11.2025
(51) Int. Cl.: H01M 10/04, H01M 10/647, H01M 10/655, H01M 10/658, H01M 10/6554

(54) **METHOD FOR MANUFACTURING ENERGY STORAGE MODULE**

(30) Priority: 26.02.2025 JP 2025029447
(71) Applicant: Toyota Jidosha Kabushiki Kaisha, Toyota-shi, Aichi-ken 471-8571 (JP)
(72) Inventor: OGUMA, Yasumasa, Toyota-shi, 471-8571 (JP)
(74) Representative: TBK

(57) **Abstract**

A method for manufacturing an energy storage module including a plurality of energy storage cells stacked along a first direction and at least one heat insulating member disposed between two adjacent ones of the energy storage cells includes: a pressing step of pressing, in a thickness direction of the heat insulating member, at least a region of the heat insulating member that includes a non-identical position portion, the non-identical position portion being a portion overlapping, in the first direction, a portion of at least one of the energy storage cells adjacent to the heat insulating member in which no electrode is accommodated; and a placing step of placing the heat insulating member such that the portion of at least one of the energy storage cells adjacent to the heat insulating member in which no electrode is accommodated overlaps, in the first direction, a pressed portion of the heat insulating member.

## Description

### BACKGROUND OF THE INVENTION

### 1. Field of the Invention

The present disclosure relates to methods for manufacturing an energy storage module.

### 2. Description of Related Art

In recent years, with the increasing capacity and output of energy devices, battery modules having a stacked structure in which multiple energy storage cells are stacked have been widely used. In some cases, components such as sheets with heat insulating properties are used in the stacked structure to prevent or reduce thermal runaway propagation.

For example, a battery module is known in which multiple battery cells are stacked with a buffer sheet interposed therebetween. In this battery module, performance degradation and failure are suppressed by specifying the aspect ratio of the main surface of each battery cell, the physical properties of the buffer sheet, etc. (see Japanese Unexamined Patent Application Publication No. 2023-46073 A).

### SUMMARY OF THE INVENTION

In a battery module in which a plurality of battery cells is stacked with a component such as a sheet interposed therebetween, local stress concentration may occur in the battery cells when a stacked structure in which a stack including the battery cells and a heat insulating member is restrained with a pressure applied in the stacking direction. As a result, deformation of the battery cells may progress, leading to issues such as misalignment of terminal holes for the terminals of the battery cells during, for example, the manufacturing of the battery module.

An object of one embodiment of the present disclosure is to provide a method for manufacturing an energy storage module that suppresses deformation of energy storage cells in a stacked structure including the energy storage cells and a heat insulating member.

Means for achieving the above object include the following aspects.
(1) A method for manufacturing an energy storage module including a plurality of energy storage cells stacked along a first direction and at least one heat insulating member disposed between two adjacent ones of the energy storage cells, the method including: a pressing step of pressing, in a thickness direction of the heat insulating member, at least a region of the heat insulating member that includes a non-identical position portion, the non-identical position portion being a portion that overlaps, in the first direction, a portion of at least one of the energy storage cells adjacent to the heat insulating member in which no electrode is accommodated; and a placing step of placing the heat insulating member such that the portion of at least one of the energy storage cells adjacent to the heat insulating member in which no electrode is accommodated overlaps, in the first direction, a pressed portion of the heat insulating member.
(2) The method according to (1), wherein, in the pressing step, the heat insulating member is entirely pressed in the thickness direction of the heat insulating member.
(3) The method according to (1), wherein the pressing step includes either not pressing at least part of an identical position portion of the heat insulating member or pressing at least part of the identical position portion of the heat insulating member with a pressing pressure smaller than a pressing pressure applied to the non-identical position portion, the identical position portion being a portion that overlaps, in the first direction, a portion of the energy storage cell adjacent to the heat insulating member in which an electrode is accommodated.
(4) The method according to any one of (1) to (3), further including a restraining step of restraining, while applying a pressure in the first direction, an energy storage cell stack including the energy storage cells and the heat insulating member disposed between two adjacent ones of the energy storage cells.
(5) The method according to (4), wherein the pressing step includes pressing the heat insulating member with a pressing pressure greater than or equal to the pressure applied in the first direction when restraining the energy storage cell stack.

According to one embodiment of the present disclosure, it is possible to provide a method for manufacturing an energy storage module that suppresses deformation of energy storage cells in a stacked structure including the battery cells and a heat insulating member.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic external view of an energy storage cell as viewed from a stacking direction;
FIG. 2 is a schematic external view of two energy storage cells that form an energy storage cell group, as viewed from the stacking direction;
FIG. 3 is an explanatory diagram illustrating the positions of electrodes accommodated in energy storage cells, and illustrating a case where an energy storage cell group, formed by stacking two energy storage cells, is viewed from the side of the energy storage cells.
FIG. 4 is a schematic external view of a heat insulating member as viewed from the stacking direction;
FIG. 5 is an explanatory view of an energy storage cell stack produced by a method for manufacturing an energy storage module according to the present disclosure, as viewed from the side of the energy storage module; and
FIG. 6 is an explanatory view of an energy storage cell stack produced by a conventional method for manufacturing an energy storage module, as viewed from the side of the energy storage module.

### DETAILED DESCRIPTION OF EMBODIMENTS

The present disclosure is not limited to the embodiment described below, and various modifications may be made without departing from the technical idea of the present disclosure.
In the present disclosure, the term "step" (or "process") includes not only an independent step, but also a step that is not clearly distinguishable from other steps, as long as the intended purpose of the step is achieved.
In the present disclosure, a combination of two or more preferable aspects is considered a more preferable aspect.
In the present disclosure, when an embodiment is described with reference to the drawings, the configuration of the embodiment is not limited to the configuration illustrated in the drawings. The sizes of components in each drawing are conceptual, and the size relationships among the components are not limited those illustrated in the drawings.
In this disclosure, the term "energy storage cell" refers to a secondary battery cell, and the term "energy storage module" refers to a secondary battery module.

### Method for Manufacturing Energy Storage Module

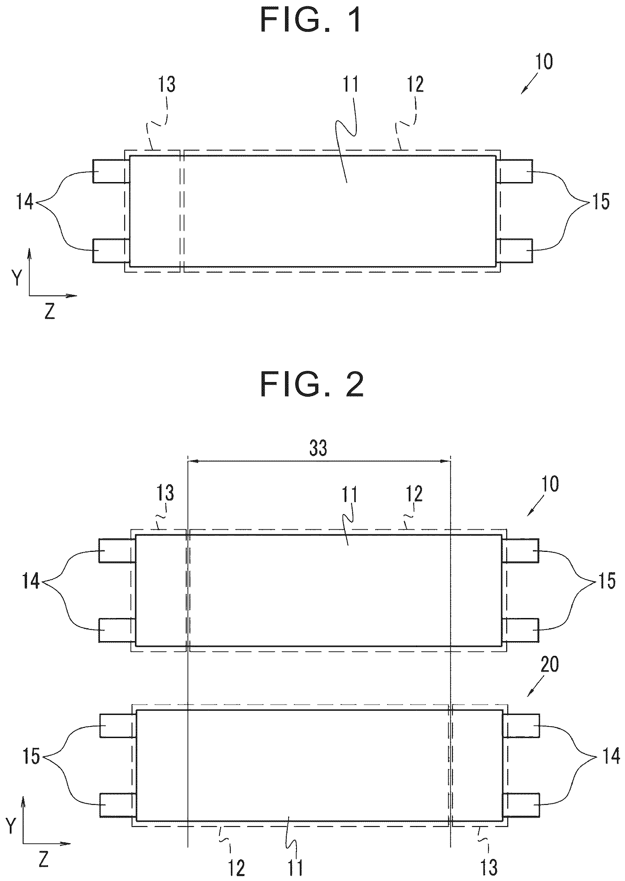

A method for manufacturing an energy storage module according to the present disclosure will now be described with reference to FIGS. 1 to 5.
A method for manufacturing an energy storage module according to the present disclosure is a method for manufacturing an energy storage module including a plurality of energy storage cells stacked along a first direction and at least one heat insulating member disposed between two adjacent ones of the energy storage cells. The method includes a pressing step and a placing step. In the pressing step, at least a portion of the heat insulating member that includes a non-identical position portion is pressed in the thickness direction of the heat insulating member. The non-identical position portion is a portion that overlaps, in the first direction, a portion of at least one of the energy storage cells adjacent to the heat insulating member in which no electrode is accommodated. In the placing step, the heat insulating member is placed such that the portion of at least one of the energy storage cells adjacent to the heat insulating member in which no electrode is accommodated overlaps, in the first direction, a pressed portion of the heat insulating member. The first direction refers to the stacking direction of the energy storage cells and the heat insulating member. The pressing step and the placing step are performed in this order.

### Configuration of Energy Storage Module

The energy storage module includes a plurality of energy storage cells. Each energy storage cell, when viewed from a direction in which a pressure is applied during restraint, may have an electrode portion in which electrodes are accommodated so as to be substantially solid, and a non-electrode portion, other than the electrode portion, that contains a space inside. The configuration, size, and type of the energy storage cells are not particularly limited. The direction in which a pressure is applied during restraint is a first direction, namely the stacking direction of the energy storage cells. The energy storage cells may include the same type of energy storage cells or may include different types of energy storage cells. From the standpoint of improving battery performance through restraint, the energy storage cells are preferably secondary solid-state cells.

As shown in FIG. 1, an energy storage cell 10, which is an example of the energy storage cell, is a solid-state energy storage cell. The energy storage cell 10 has a rectangular plate shape, and includes a main surface 11 extending along a Y-Z plane formed by a Y-direction and a Z-direction that are perpendicular to the stacking direction. When viewed from the stacking direction, the energy storage cell 10 includes an electrode portion 12 in which electrodes are present, and a non-electrode portion 13 in which components other than electrodes are present. In the electrode portion 12, electrodes are accommodated substantially solidly inside the exterior casing of the energy storage cell 10, and there is almost no space in the stacking direction. On the other hand, in the non-electrode portion 13, an electrode foil bundle and the like are accommodated inside the exterior casing of the energy storage cell 10, and there is a space in the stacking direction.

The terminal structure of the energy storage cell is not limited. Either a configuration in which the main surface 11 is used as a terminal or a configuration in which a terminal is provided for use may be employed. In the energy storage cell 10, a negative electrode terminal 14 is provided at one end, and a positive electrode terminal 15 is provided at the other end.

A heat insulating member is placed between two adjacent energy storage cells. The arrangement of the energy storage cells and the heat insulating member is not limited as long as the heat insulating member is placed between two adjacent energy storage cells. Examples of the arrangement include one in which energy storage cells and heat insulating members are alternately arranged such that each heat insulating member is located between two energy storage cells, one in which the heat insulating member is placed between groups of a predetermined number of (two or more) stacked power storage cells, or one in which the heat insulating member is placed between one energy storage cell and a plurality of energy storage cell groups. In the method for stacking energy storage cells, it is preferable from the standpoint of load balance to stack them such that the non-electrode portions 13 are arranged in a balanced manner.

As shown in FIG. 2, the energy storage cell group may include two energy storage cells, namely the energy storage cell 10 and an energy storage cell 20. The energy storage cells 10, 20 are of the same type. Both the energy storage cell 10 and the energy storage cell 20 have the non-electrode portion 13 on the side of the negative electrode terminal 14. The energy storage cells 10, 20 are of the same type and are stacked with one of them in reverse orientation relative to the other.

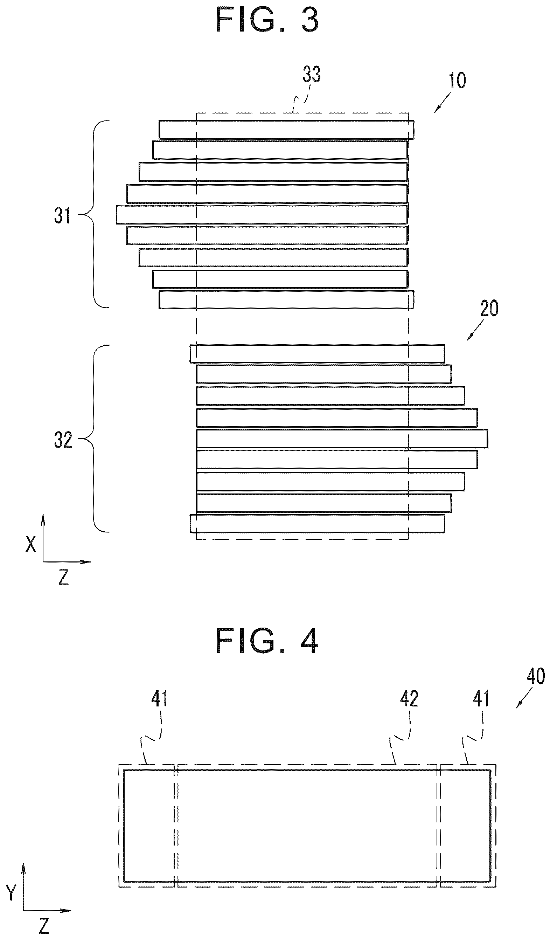

As shown in FIG. 3, the energy storage cells 10, 20 accommodate electrodes. The electrodes include an electrode laminate in which a current collector layer, an active material layer, an electrolyte layer, etc. are stacked. The energy storage cell 10 accommodates an electrode laminate 31, and the energy storage cell 20 accommodates an electrode laminate 32. In the energy storage cell group, the electrode portions of the energy storage cells 10, 20 form an identical position portion 33 in which the electrode portions overlap in the stacking direction, when viewed from the stacking direction. When an energy storage cell stack is formed using the energy storage cell group, forming the identical position portion 33 makes it possible to apply an appropriate pressure to and restrain at least the entire electrode laminate present in the identical position portion 33. The term "energy storage cell stack" refers to a stack formed by stacking the energy storage cells and the heat insulating members. From the standpoint of performance of the energy storage module, it is preferable to form the energy storage cell stack so as to form the identical position portion 33.

The energy storage module includes the energy storage cell stack. The energy storage module preferably further includes a restraint member that restrains the energy storage cell stack with a pressure applied thereto.

### Method for Manufacturing Energy Storage Module

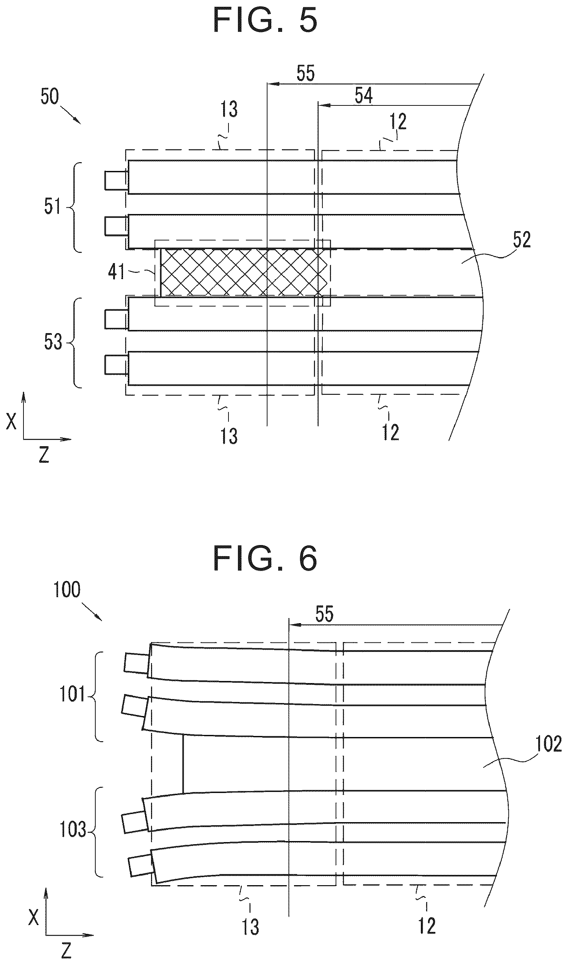

As shown in FIG. 6, in a conventional method for manufacturing an energy storage module, it has been common to simply stack energy storage cells and heat insulating members and then restrain them. In this method, the thickness of the heat insulating members tends to be uneven. Therefore, the load is not evenly distributed, and local stress concentrations tend to occur at specific locations. As a result, deformation of the energy storage cells progresses, making it likely that the aligned terminal holes will become misaligned. More specifically, in the conventional method for manufacturing an energy storage module, the non-electrode portion of an energy storage cell adjacent to a heat insulating member may undergo bending deformation around a location near the end of the electrode portion serving as a fulcrum. Such deformation of the energy storage cell may cause, for example, misalignment of terminal holes provided at the ends of the energy storage cells. Accordingly, in the manufacturing process of the energy storage module, it is sometimes necessary to perform steps such as correcting deformation of the energy storage cells and correcting misalignment of the terminal holes before performing the connection process of the terminal holes, which can make efficient manufacturing of the energy storage module difficult. As shown in FIG. 6, an energy storage module includes an energy storage cell stack 100 in which an energy storage cell group 101 including two energy storage cells, a heat insulating member 102, and an energy storage cell group 103 including two energy storage cells are stacked in this order. This illustrates an example manufactured without performing a pressing step in advance on the heat insulating member 102. During restraint, a pressure is applied in the stacking direction X to a pressed portion 55 including the electrode portions 12.

In order to suppress deformation of the energy storage cells during restraint, the inventors focused on the load applied to each component during restraint. As a result, the inventors obtained the following findings. The heat insulating member deforms under load in portions where the restraining pressure is applied during restraint, and is subjected to load in portions where the restraining pressure is not applied. In each energy storage cell adjacent to the heat insulating member, the load from the heat insulating member as described above is applied locally near the end of the electrode portion 12, that is, in a region of the non-electrode portion 13 close to the electrode portion 12. As a result, a bending moment is generated in the energy storage cell. This causes the non-electrode portion 13 of each energy storage cell adjacent to the heat insulating member to undergo bending deformation around a location near the end of the electrode portion 12 serving as a fulcrum. As a result, the end of the energy storage cell is displaced from its original position. It is presumed that such displacement causes misalignment of the terminal holes provided at the ends of the energy storage cells.

Through study of the above issue, the inventors found that deformation of the energy storage cells during restraint can be suppressed by pressing a specific portion of the heat insulating member in advance. While the mechanism by which this effect is achieved is not clear, it is presumed that, by pressing a specific portion of the heat insulating member in advance, the concentration of load applied to the heat insulating member during restraint can be dispersed without impairing the function of the heat insulating member, thereby appropriately suppressing stress concentration in the energy storage cells.

### Pressing Step

In the pressing step, at least a region of the heat insulating member that includes a non-identical position portion is pressed in the thickness direction of the heat insulating member. The non-identical position portion is a portion that overlaps, in the stacking direction, the non-electrode portion of at least one of the energy storage cells adjacent to the heat insulating member. Each energy storage cell adjacent to the heat insulating member includes an identical position portion and a non-identical position portion other than the identical position portion. The heat insulating member also includes an identical position portion and a non-identical position portion corresponding to the electrode portions and the non-electrode portions of its adjacent energy storage cells, respectively. Accordingly, the pressing position of the heat insulating member varies depending on its adjacent energy storage cells.

In the present disclosure, the term "pressing" refers to a process of applying a mechanical pressure in the thickness direction of the heat insulating member. Examples of the pressing method include roll pressing, stamping, and compression molding. However, the pressing method is not limited to these. In the pressing step, a certain pressure is applied to a portion of the heat insulating member that includes the non-identical position portion, thereby deforming the portion of the heat insulating member in the thickness direction. The pressing in this case may be performed within an appropriate pressure range according to characteristics such as the compression ratio of the heat insulating member.

The heat insulating member may be any member as long as it exhibits performance as a heat insulating member, such as heat insulating properties that suppress heat transfer between adjacent energy storage cells and local temperature rise, and elasticity that absorbs pressure changes due to expansion and contraction of the energy storage cells and improves the stability of the energy storage module. The type of the heat insulating member, such as its shape, material, and size, is not limited. The material of the heat insulating member preferably has voids so as to reduce thermal conductivity and to be appropriately compressed under a load applied by pressing or a load applied by restraint.

From the standpoint of allowing the heat insulating member to perform its function and suppressing deformation of the energy storage cells, it is preferable that the heat insulating member have a rectangular plate shape that is substantially the same as that of the energy storage cells. From the standpoint of suppressing deformation of the energy storage cells, the shape of the heat insulating member may be adjusted as long as the heat insulating member can perform its function. The heat insulating member may have a rectangular shape having the same size as that of the electrode portions of its adjacent energy storage cells. That is, the length in the Y-direction and the length in the Z-direction of the heat insulating member may be the same as the length in the Y-direction and the length in the Z-direction of the electrode portions, respectively. Since the heat insulating member has the same size as that of the electrode portions of its adjacent energy storage cells, stress concentration in the non-identical position portion of the heat insulating member can be eliminated or reduced, thereby suppressing deformation of the energy storage cells due to stress concentration.

The heat insulating member may have a smooth surface or a wavy surface. The heat insulating member may have a single porous structure having voids, or a multilayer heat insulating structure formed by combining different layers. The heat insulating member may be formed of an inorganic material, an organic material, or a composite material containing different materials. The heat insulating member may be selected according to factors such as the arrangement of the energy storage cells, the type of the energy storage cells, the stacking structure of the energy storage cell stack, the load applied during restraint, and the type of the energy storage module.

Depending on the type of the heat insulating member etc., the pressing step may be performed under any pressing condition as long as, as a result of pressing, the shape of the heat insulating member is deformed so as to be at least thinner than before pressing. It is more preferable, from the standpoint of suppressing deformation of the energy storage cells, to press the heat insulating member under a pressing condition such that, when the heat insulating member is incorporated into the energy storage cell stack, the overall difference in thickness within the heat insulating member is smaller. It is preferable that, by using the pressed heat insulating member, the difference in thickness between the identical position portion and the non-identical position portion be small when the heat insulating member is incorporated into the energy storage cell stack. From the standpoint of suppressing deformation of the energy storage cells, it is also preferable that, when the energy storage cell stack is restrained with a pressure applied thereto in the stacking direction, the difference in thickness between the identical position portion and the non-identical position portion of the heat insulating member be small. From the standpoint of suppressing deformation of the energy storage cells, it is preferable that the heat insulating member disposed in the energy storage module have a small overall thickness difference.

From the standpoint of suppressing deformation of the energy storage cells, it is preferable that the pressing step be performed to press the heat insulating member with a pressing pressure greater than or equal to the pressure applied in the stacking direction when restraining the energy storage cell stack.

As shown in FIG. 4, a heat insulating member 40 includes non-identical position portions 41 each of which overlaps, in the stacking direction, the non-electrode portion 13 of a corresponding one of its adjacent energy storage cells 10, 20. Of the two non-identical position portions 41 located at both ends of the heat insulating member 40, one corresponds to the energy storage cell 10, and the other corresponds to the energy storage cell 20. In the pressing step, at least the non-identical position portions 41 of the heat insulating member 40 are pressed in the thickness direction of the heat insulating member 40. Accordingly, regions of the heat insulating member 40, each including a corresponding one of the two non-identical position portions 41, are pressed in the pressing step.

A portion of the heat insulating member 40 that overlaps the electrode portion 12 of its adjacent energy storage cells 10 in the stacking direction is an "identical position portion" 42. From the viewpoint of suppressing deformation of the energy storage cells, the identical position portion 42 may or may not be pressed. The pressing step of pressing the heat insulating member 40 may press at least the non-identical position portions 41, and may press the entire heat insulating member 40, including both the non-identical position portions 41 and the identical position portion 42, in the thickness direction of the heat insulating member 40. Alternatively, the entire non-identical position portions 41 and part of the identical position portion 42 may be pressed. It is preferable that the non-identical position portions 41 and the identical position portion 42 of the heat insulating member 40 have the same thickness after pressing. In other words, it is preferable that the thickness of the heat insulating member 40 be uniform in the in-plane direction.

During restraint, a pressure is applied to the identical position portion 42 of the heat insulating member 40. From the standpoint of allowing the heat insulating member to effectively perform its function, in the step of pressing the heat insulating member 40, at least the non-identical position portions 41 of the heat insulating member 40 may be pressed while leaving at least part of the identical position portion 42 thereof unpressed. Similarly, at least the non-identical position portions 41 of the heat insulating member 40 may be pressed, while the identical position portion 42 thereof is pressed at a pressure lower than that applied to the non-identical position portions 41.

### Placing Step

In the placing step, the heat insulating member is placed such that a portion of at least one of the energy storage cells adjacent to the heat insulating member in which no electrode is accommodated, that is, a non-electrode portion, overlaps, in the stacking direction, a pressed portion of the heat insulating member, that is, a non-identical position portion.

In the pressing step, at least the non-identical position portion of the heat insulating member is pressed in advance. In the placing step, the pressed portion of the heat insulating member is placed so as to overlap the non-electrode portion in the stacking direction, thereby forming an energy storage cell stack. This is estimated to suppress local stress concentration in the heat insulating member when the energy storage cell stack is restrained with a pressure applied thereto. In the identical position portion, the heat insulating member is stacked adjacent to the energy storage cells. This allows the heat insulating member to perform its function as a heat insulating member while suppressing local stress concentration in the heat insulating member. As a result, deformation of the energy storage cell can be suppressed.

As described above, the configuration of the energy storage cell stack is not limited, and the number of energy storage cells, the number of heat insulating members, the configuration of the energy storage cell stack, etc. can be selected as appropriate.

As shown in FIG. 5, an energy storage cell stack 50 included in the energy storage module is formed by stacking, in this order, an energy storage cell group 51 including two energy storage cells, a heat insulating member 52, and an energy storage cell group 53 including two energy storage cells. The non-identical position portion 41 of the heat insulating member 52 has been pressed before stacking. The heat insulating member 52 includes a pressed portion, and an unpressed portion in an identical position portion 54. A pressure is applied by the restraint to the pressed portion 55, including the identical position portion 54 that is common to the energy storage cells and the heat insulating member. In the energy storage cell stack 50 included in the energy storage module, the heat insulating member 52 has been pressed in advance, thereby suppressing deformation of the energy storage cells. Accordingly, misalignment of the terminals of the respective energy storage cells is suppressed, and misalignment of the terminal holes is also suppressed.

In the method for manufacturing an energy storage module according to the present disclosure, when an energy storage cell stack having a stacked structure is formed by restraining it while applying a pressure in the stacking direction, the non-electrode portion of an energy storage cell adjacent to the heat insulating member is less likely to undergo bending deformation around a location near the end of the electrode portion serving as a fulcrum. As a result, misalignment between the terminal portions of the energy storage cells is also suppressed.

### Restraining Step

The method for manufacturing an energy storage module according to the present disclosure may include a restraining step. The restraining step is a step of restraining, while applying a pressure in the stacking direction, an energy storage cell stack including a plurality of energy storage cells and a heat insulating member disposed between two adjacent ones of the energy storage cells. With the method for manufacturing an energy storage module including the restraining step, deformation of the energy storage cells can be effectively suppressed.

In the restraining step, the energy storage cell stack produced through the pressing step and the placing step is restrained with a pressure applied thereto in the stacking direction. The pressing condition may be determined as appropriate from the standpoint of the performance of the energy storage module. As described above, from the standpoint of suppressing deformation of the energy storage cells, it is preferable that the pressure applied during restraint be smaller than the pressing pressure applied to the heat insulating member in the pressing step. For example, when the pressing pressure applied to the heat insulating member in the pressing step is 4 MPa, it is preferable that the pressure applied during restraint be 2 MPa.

### Energy Storage Module

The energy storage module according to the present disclosure includes a plurality of energy storage cells stacked along a first direction, and at least one heat insulating member disposed between two adjacent ones of the energy storage cells. A portion of the heat insulating member that includes a non-identical position portion is compressed in a thickness direction of the heat insulating member. The non-identical position portion is a portion that overlaps, in the first direction, a portion of at least one of the energy storage cells adjacent to the heat insulating member in which no electrode is accommodated.

The energy storage module according to the present disclosure can suppress deformation of the energy storage cells. Even when an energy storage cell stack including the energy storage cells and the heat insulating member is restrained by a restraining member with a pressure applied in the stacking direction, deformation of the energy storage cells is suppressed. Accordingly, the manufacturing cost and stability of the energy storage module can be improved.

### Types and Applications of Energy Storage Module

In the method for manufacturing an energy storage module according to the present disclosure, the energy storage cells are preferably solid-state cells, since deformation of the energy storage cells can be significantly suppressed. The type of solid-state cell is not particularly limited, but a typical example is a lithium-ion cell. The solid-state cells are preferably secondary cells. The solid-state cells may be semi-solid cells including, between an electrode and a solid electrolyte, a gel layer containing an electrolyte solution and a polymer, or all-solid-state cells including a solid electrolyte layer. The solid-state cells are preferably all-solid-state cells, since deformation of the energy storage cells can be significantly suppressed.

In the method for manufacturing an energy storage module according to the present disclosure, the application of the energy storage module is not particularly limited. Representative applications include a wide range of uses such as vehicles, electronic devices, and energy storage systems, but the energy storage module is particularly suitable for use as a drive power source for, for example, hybrid electric vehicles (HEVs), plug-in hybrid electric vehicles (PHEVs), or battery electric vehicles (BEVs). The energy storage module can also be used as a power source for moving bodies such as railway vehicles, ships, and aircraft, and for information processing devices.

Hereinafter, the present disclosure will be described in further detail by way of examples. However, the invention according to the present disclosure is not limited to these examples.

### Comparative Example 1, Example 1, and Example 2

Three heat insulating members A-1, A-2, A-3 of the same type, each having substantially the same size as the energy storage cells, were prepared. In Comparative Example 1 (heat insulating member A-1), the pressing step was not performed, and the heat insulating member A-1 was used as is. In Example 1 (heat insulating member A-2), pressing was performed on the entire surface of the heat insulating member A-2 at a pressure of 2 MPa in its thickness direction. In Example 2 (heat insulating member A-3), pressing was performed on a region of a non-identical position portion of the heat insulating member A-3 at a pressure of 4 MPa in its thickness direction, and no pressing was performed on an identical position portion thereof.

Using each of the heat insulating members A-1, A-2, A-3, energy storage modules were produced by the following method. The configuration of each energy storage module is as follows. Two energy storage cell groups, each including two energy storage cells stacked together, were prepared. In each energy storage cell group, the two energy storage cells were stacked such that terminal holes provided in the respective energy storage cells were substantially aligned with each other. An energy storage cell stack was formed by disposing, between the energy storage cell groups, the heat insulating member A-1, A-2, or A-3. Each of the heat insulating members A-2, A-3 was placed such that the pressed portion of the heat insulating member overlaps, in the stacking direction, a portion of an energy storage cell in which no electrode is accommodated. Thereafter, using a restraining member, a pressure (2 MPa) was applied to the energy storage cell stack in the stacking direction to perform restraint. The energy storage module was thus produced.

After the restraint was performed, each of the produced energy storage modules was visually inspected from its side direction (Z-direction, see FIG. 5 or 6) to check whether misalignment had occurred between the terminal holes arranged to be aligned. In the cases where the heat insulating member A-2 of Example 1 and the heat insulating member A-3 of Example 2, each produced according to the method for manufacturing an energy storage module of the present disclosure, were used, no misalignment occurred between the two terminal holes, and the initial arrangement of the terminal holes was maintained. However, in the case where the heat insulating member A-1 of Comparative Example 1 was used, misalignment occurred between the two terminal holes, and half or more of each hole was blocked. These results are shown in Table 1.

**Table 1**

| | Pressing Step | Size of Heat Insulating Member | Misalignment of Two Aligned Terminal Holes |
|---|---|---|---|
| Comparative Example 1 | No | Same size as energy storage cells | Yes |
| Example 1 | Yes (entire surface) | Same size as energy storage cells | No |
| Example 2 | Yes (non-identical position portion only) | Same size as energy storage cells | No |

### Reference Examples 1, 2

Two heat insulating members A-4, A-5 of the same type, each having substantially the same size as the electrode portions of the energy storage cells, were prepared. In Reference Example 1 (heat insulating member A-4), the pressing step was not performed, and the heat insulating member A-4 was used as is. In Reference Example 2 (heat insulating member A-5), pressing was performed on the entire surface of the heat insulating member A-5 at a pressure of 2 MPa in its thickness direction.

Using each of the heat insulating members A-4, A-5, energy storage modules were produced in the same manner as in Example 1. After the restraint was performed, whether misalignment had occurred in the terminal holes arranged to be aligned was checked in the same manner as in Example 1. In the cases where the heat insulating member A-4 and the heat insulating member A-5 were used, no misalignment occurred between the two terminal holes, and the initial arrangement of the terminal holes was maintained. These results are shown in Table 2.

**Table 2**

| | Pressing Step | Size of Heat Insulating Member | Misalignment of Two Aligned Terminal Holes |
|---|---|---|---|
| Reference Example 1 | No | Same size as identical position portion | No |
| Reference Example 2 | Yes (entire surface) | Same size as identical position portion | No |

## Claims

1. A method for manufacturing an energy storage module including a plurality of energy storage cells stacked along a first direction and at least one heat insulating member disposed between two adjacent ones of the energy storage cells, the method comprising:
a pressing step of pressing, in a thickness direction of the heat insulating member, at least a region of the heat insulating member that includes a non-identical position portion, the non-identical position portion being a portion that overlaps, in the first direction, a portion of at least one of the energy storage cells adjacent to the heat insulating member in which no electrode is accommodated; and
a placing step of placing the heat insulating member such that the portion of at least one of the energy storage cells adjacent to the heat insulating member in which no electrode is accommodated overlaps, in the first direction, a pressed portion of the heat insulating member.

2. The method according to claim 1, wherein, in the pressing step, the heat insulating member is entirely pressed in the thickness direction of the heat insulating member.

3. The method according to claim 1, wherein the pressing step includes either not pressing at least part of an identical position portion of the heat insulating member or pressing at least part of the identical position portion of the heat insulating member with a pressing pressure smaller than a pressing pressure applied to the non-identical position portion, the identical position portion being a portion that overlaps, in the first direction, a portion of the energy storage cell adjacent to the heat insulating member in which an electrode is accommodated.

4. The method according to claim 1, further comprising
a restraining step of restraining, while applying a pressure in the first direction, an energy storage cell stack including the energy storage cells and the heat insulating member disposed between two adjacent ones of the energy storage cells.

5. The method according to claim 4, wherein the pressing step includes pressing the heat insulating member with a pressing pressure greater than or equal to the pressure applied in the first direction when restraining the energy storage cell stack.
